# EUROPÄISCHE PATENTSCHRIFT

(11) **EP 0 918 211 B1**
(45) Veröffentlichungstag und Bekanntmachung des Hinweises auf die Patenterteilung: **02.07.2003**
(21) Anmeldenummer: 98121870.4
(22) Anmeldetag: 18.11.1998
(51) Int. Cl.: G01B 7/06, G01B 101/50, G01B 121/04, B29C 47/92

(54) **Kapazitiver Foliendickensensor mit induktivem Sensor zur Korrektur bei einer Regelung**
Capacitive film thickness probe with inductive probe for correction in a control
Sonde capacitive de mesure d'épaisseur de film avec sonde inductive de correction pour réglage

(30) Priorität: 21.11.1997 AT 197397
(43) Veröffentlichungstag der Anmeldung: 26.05.1999
(73) Patentinhaber: Bierbaumer, Hans-Peter Dr. h.c., 4532 Rohr (AT)
(72) Erfinder: Bierbaumer, Hans-Peter Dr. h.c., 4532 Rohr (AT)
(74) Vertreter: Secklehner, Günter, Dr.

(56) Entgegenhaltungen:
- DE-A- 3 107 701
- DE-A- 4 431 934
- US-A- 3 059 466

## Beschreibung

Die Erfindung betrifft eine Regelungsvorrichtung der Dicke einer der zumindest einer Düse eines Extruders austretenden Bahn aus Kunststoff, sowie ein entsprechendes Verfahren.

Es sind bereits eine Fülle unterschiedlicher Vorrichtungen zum Messen der Dicke von insbesondere kontinuierlich bewegten Folien bekannt. So werden u.a. auf der Folie aufgelegte und mit einem elektrischen Signalgeber bewegungsgekoppelte Fühlorgane verwendet, um anhand deren Ausgangssignal die Dicke der Folie zu ermitteln. Des weiteren ist es auch möglich, im Seitenkantenbereich von Bändern über Lichtschranken oder Distanzsensoren die Dicke des Bandes festzustellen.

Dabei ist es auch bereits bekannt, die Sensoren quer zur Förderrichtung eines Bandes hin- und herzubewegen, um über die gesamte Breite eines Bandes die Dickenverhältnisse feststellen zu können. Nachteilig ist bei diesen Systemen, daß die eingesetzten Sensoren verschleiß- und störanfällig sind und mechanische Ungenauigkeiten oder mechanische Abweichungen im System immer wieder das Meßergebnis verfälschen.

In der DE 44 31 934 A1 ist eine Vorrichtung beschrieben, mit welcher die einer Druckmaschine zuzuführende Anzahl von Bögen aus Papier kontrolliert bzw. mit welcher die Zuführung von Fehl- bzw. Doppelbögen erkannt werden kann. Diese berührungslose Ermittlung der Anzahl der während der Zuförderung schuppenartig übereinander liegenden Bögen erfolgt dabei durch Erfassung des stufenartigen Dickenverlaufes der mittels einem Fördertisch zugeführten Bahn aus einzelnen, sich teilweise überdeckenden Bögen. Die Einzelbögen werden dabei zwischen dem Fördertisch und der davon beabstandeten Erfassungsebene einer Meßsensorenanordnung einreihig hindurch bewegt. Diese Meßsensorenanordnung ist durch einen kapazitiv arbeitenden Meßsensor und durch einen Wirbelstrommeßsensor bzw. einen induktiv arbeitenden Meßsensor gebildet, wobei die beiden zu einer Baueinheit zusammengefaßte Sensortypen mit einer Auswerteschaltung leitungsverbunden sind. Der kapazitive Meßsensor verwendet dabei den Fördertisch als Gegenelektrode und stellt der zwischen dem kapazitiven Meßsensor und dem Fördertisch hindurchlaufende Bogenstrom ein Dielektrikum dar. Der induktive Sensor erzeugt ein dem Abstand zum Fördertisch entsprechendes elektrisches Signal. Die elektrischen Signale des induktiven Sensor und des kapazitiven Sensor werden durch Subtraktion miteinander verknüpft, sodaß Abstandsschwankungen zwischen der Sensoranordnung und dem Fördertisch berücksichtigt sind. Dieser Kombinationssensor ist dabei mittels einer Schelle auf einer Traverse oberhalb des Fördertisches befestigt. Die Schellenteile der bevorzugt zweiteiligen Schelle sind mittels Spannschrauben zusammengehalten, sodaß der Sensor auf der Traverse festgelegt ist. Diese bekannte Vorrichtung eignet sich zwar zur Kontrolle der Anzahl von zugeführten Bögen, eine exakte Schichtdickenbestimmung eines einzelnen Bogens ist durch die schuppenartig übereinanderliegenden Einzelbögen und die somit stufenartig schwankenden Meßsignale aber nicht durchführbar. Zudem dürfen die Freiräume im Übergangsbereich von einem Bogen zum benachbarten Bogen nicht als Schichtdicke gewertet werden. Darüber hinaus kann lediglich die Anzahl der vertikal zur Förderrichtung übereinander liegenden Bögen bestimmt werden und ist eine Erfassung von quer zur Förderrichtung versetzter Einzelbögen nicht ermöglicht.

Die US 3,059,466 A beschreibt eine Vorrichtung, bei welcher Bandmaterial über eine Walze geführt wird und dabei Dickenschwankungen des Bandmaterials angezeigt werden. Um hierbei Rundlaufungenauigkeiten bzw. Höhenschläge der Walze kompensieren zu können, welche ansonsten den angezeigten Dickenverlauf des Bandmaterials verfälschen würden, ist im Stirnendbereich der Walze eine einstellbare Nockenanordnung bzw. eine einstellbare Steuerscheibe montiert. An dieser Steuerscheibe ist dann eine Steuerkurve einstellbar, welche zur mechanischen bzw. elektromechanischen Aufhebung von durch die Walze bedingten Anzeigeschwankungen dient. Bei dieser Vorrichtung sind die Walzenungenauigkeiten lediglich in einem einzigen Umfangsbereich berücksichtigt und ist auch nur eine relativ grobe Maßauflösung erreichbar. Zudem ist diese Vorrichtung lediglich zur Visualisierung der Dickenschwankungen von mit geringer Geschwindigkeit gefördertem Bandmaterial geeignet.

Die DE 31 07 701 A1 beschreibt eine Vorrichtung zur Regelung der Dicke von Folien oder Platten aus thermoplastischen Kunststoffen. Dabei werden von einem senkrecht zur Extrusionsrichtung traversierenden Meßgerät fortlaufend Dickenmeßwerte von der aus der Extruderdüse hervortretenden Folie bzw. Platte aufgenommen. Diese Ist-Werte werden mit Soll-Wertvorgaben verglichen und beim Auftreten von Abweichungen wird regelnd in den Produktionsprozeß eingegriffen. Das quer zur Extrusionsrichtung über die Folienbreite hin- und herbewegte Dickenmeßgerät nimmt entlang der dabei entstehenden sägezahnförmigen Meßkurve ein Dickenprofil des Extrudates auf. Vor allem bei etwas dünneren Kunststoffolien kann es vorkommen, daß der Mittelbereich gegenüber den Randbereichen des Folienbandes durchhängt. Dies darf aber nicht zu Meßwertverfälschungen führen, noch dazu wenn die gemessenen Werte Einfluß auf den Extrusionsprozeß haben, da ansonsten unzutreffende Regeleingriffe stattfinden, durch welche die einzuhaltende Dickentoleranz erst recht nicht erreicht werden kann.

Der vorliegenden Erfindung liegt die Aufgabe zugrunde, eine entsprechender Regelungvorrichtung sowie ein Verfahren zu schaffen, mit dem eine exakte und störsichere Meßwertermittlung bei hoher Geschwindigkeit möglich ist.

Diese Aufgabe der Erfindung wird nach den Ansprüchen 1, 19 gelöst.

Vorteilhaft ist bei dieser Anordnung, daß durch die ständige Messung der Distanz zwischen der Sensoranordnung bzw. den Meßwertgebern oder Sensoren und der Führungsfläche am Führungsorgan kontinuierlich die aktuelle Lage der Sensoranordnung zur Führungsfläche ermittelt wird und damit durch mechanische Toleranzen bedingte Veränderungen in der Distanz das Meßergebnis der mit dem weiteren Sensor gleichzeitig erfaßten Dicke der Folie nicht nachteilig verändert wird. Vorteilhaft ist dabei auch, daß mechanische Schwankungen bzw. Vibrationen des Führungsorgans relativ zu den Meßwertgebern als auch Abweichbewegungen des Meßobjektes von der eigentlich vorgesehenen Meßstelle keine Auswirkungen auf die tatsächlichen Abmessungen des zu vermessenden Objektes haben. Vorteilhaft ist weiters, daß die elektrischen Eigenschaften ohnedies vorhandener, mechanischer Komponenten genutzt sind und darüber hinaus eine hochstabile, von mechanischen Krafteinwirkungen weitgehend unbeeinflußte Sensoranordnung geschaffen ist.

Vorteilhaft ist bei dieser Lösung weiters, daß Dimensionsabweichungen des extrudierten Produktes rasch erkannt und dadurch gezielte Gegenmaßnahmen ergriffen werden können. So ist z.B. bei der Folienextrusion jede Schwankung der Materialstärke sofort erkennbar, wodurch eine Ausschußproduktion und damit einhergehender wirtschaftlicher Schaden verhindert werden kann. Weiters ist von Vorteil, daß durch die rasche Auffindung von die Kontinuität verändernden Einflüssen oder sonstigen Fehlern, wie z.B. eine verlegte Düse, von vornherein niedrigere Produktionstoleranzen angesetzt werden können. Ein weiterer Vorteil besteht darin, daß mit dieser Meßvorrichtung mit höchster Präzision gemessen werden kann und die erfaßten Meßwerte online in die Produktionsmaschine einfließen können. Weiters erlaubt die laufende Übertragung der erfaßten Daten eine sofortige und automatische Gegensteuerung bei unerwünschten Produktveränderungen. Aufgrund des berührungslosen Wirkungsprinzips der Meßvorrichtung sind Verschleißerscheinungen an den Meßwertgebern und jegliche durch direkte Kontaktierung hervorgerufene Einflüsse am Produkt, wie z.B. Kratzer, ausgeschlossen. Ein weiterer bedeutender Vorteil der erfindungsgemäßen Meßvorrichtung liegt darin, daß diese berührungslose Dickenmessung ohne dem üblichen Einsatz von Radioaktivität erfolgt und daher ein konstantes Produktionsergebnis unter umweltfreundlichsten Bedingungen erzielbar ist. Zudem werden Beeinträchtigungen der Oberfläche des bandförmigen Produktes weitgehendst ausgeschlossen und kann der für die Meßvorrichtung benötigte Energieaufwand niedrig gehalten werden. Vorteilhaft ist auch, daß mit lediglich einem kompakten Meßorgan mehrere Meßwertaufnahmen, verteilt über das gesamte Meßobjekt, vorgenommen werden können.

Durch die vorteilhafte Weiterbildung nach Anspruch 2 wird das Gewicht der Meßvorrichtung gering gehalten und auch die Trägheit des Führungsorgans stark herabgesetzt. Darüberhinaus wird eine hohe elektrische Leitfähigkeit des Führungsorgans erreicht, wodurch das Meßverhalten der Meßvorrichtung und damit einhergehend deren Präzision positiv beeinflußt wird.

Vorteilhaft ist auch eine Weiterbildung nach Anspruch 3, da dadurch die Abnutzungsbeständigkeit des Führungsorgans erhöht und eine längere Lebensdauer erzielt wird.

Gemäß einer Ausbildung, wie im Anspruch 4 beschrieben, können in vorteilhafter Art und Weise zügige Start- und Stoppvorgänge des am Führungsorgan ablaufenden Bandes vorgenommen werden, ohne daß dadurch Beschädigungen am bandförmigen Produkt bzw. an der Kunststoffolie auftreten.

Durch die Ausbildung nach Anspruch 5 ist es möglich, daß beide Meßwertgeber auf einen einheitlichen Führungsbereich des Führungsorgans bezug nehmen und somit quer zur Förderrichtung der zu vermessenden Bahn vorherrschende Maßabweichungen des Führungsorgans, wie z.B. eine verschleißbedingte Wölbung der Führungsfläche, keinen Einfluß auf die Ist-Werte der zu vermessenden Bahn haben.

Nach einer anderen Ausführungsvariante gemäß Anspruch 6 sind die beiden Meßwertgeber unabhängig von jeglichen Durchmesserwerten des Führungsorgans, sodaß eine Justierung eines jeden Meßwertgebers in radialer Richtung eines walzenförmigen Führungorgans erübrigt ist.

Vorteilhaft ist auch eine Ausbildung nach Anspruch 7, da dadurch sämtliche Dickenabmessungen innerhalb der Breite des Bandes erfaßt werden können, also im Gegensatz zu einer Dickenmessung bezugnehmend auf die Schmalseite des bandförmigen Meßobjektes auch etwaige Minimumwerte der Dicke des Bandes erfaßt werden können.

Dabei erweist sich auch eine Ausgestaltung nach Anspruch 8 vorteilhaft, da dadurch die tatsächliche Dicke des Bandes erfaßt und ein kompakter Aufbau erzielt wird.

Nach einer vorteilhaften Weiterbildung gemäß Anspruch 9 kann jederzeit auf die Vermessung anderer Produkttypen umgestellt werden, da der ideale Arbeitspunkt der Sensoranordnung bezüglich dem Führungsorgan rasch eingestellt werden kann.

Gemäß Anspruch 10 werden in vorteilhafter Art und Weise mechanische Störkomponenten eliminiert und weiters wird eine rascher Ermittlung des jeweiligen Meßwertes erzielt, da aufwendige Rechenoperationen durch eine einfache Vergleichsoperation ersetzt sind.

Von Vorteil ist dabei eine Ausbildung nach Anspruch 11, da somit automatisch ablaufende Meßvorgänge realisiert werden können, die eine vollständige Überwachung des Produktionsergebnisses ermöglichen.

Durch die Weiterbildung nach Anspruch 12 wird erreicht, daß auch relativ zur Aufstandsfläche einer Produktionsanlage stillstehende Meßobjekte mit lediglich einem Meßorgan weitläufig vermessen werden können.

Durch die Weiterbildung nach Anspruch 13 werden auch für eine vollflächige Vermessung des bandförmigen Meßobjektes eine Reihe von mechanischen Komponenten erübrigt, wodurch ein langfristig wartungsfreier Betrieb der Meßvorrichtung erzielt wird.

Vorteilhaft ist auch eine Ausbildung nach Anspruch 14, da somit eine lückenlose Meßwertaufnahme erzielt wird und einsetzende Meßungenauigkeiten eines bestimmten Meßorgans frühzeitig erkannt werden können.

Gemäß einer Ausbildung, wie diese im Anspruch 18 beschrieben ist, kann auch bei hohen Verfahrgeschwindigkeiten des Aufnahmeschlittens ein enger Abtastabstand am Meßobjekt erreicht werden.

Dabei erweist sich eine Ausgestaltung nach Anspruch 15 vorteilhaft, da somit der Zwischenraum einander benachbarter Sensoranordnungen bei im Verhältnis zur Gesamtbreite des Bandes relativ geringem Verstellweg lückenlos bzw. mit sehr geringen Meßpunktabständen abgetastet werden kann.

Nach einer vorteilhaften Weiterbildung gemäß Anspruch 16 wird bei vorliegenden Abweichungen des Ist-Wertes der Dicke des bandförmigen Produktes automatisch die entsprechende Gegenmaßnahme eingeleitet, um dabei ohne nennenswerter Totzeit die vorgesehenen Abmessungen bzw. die Soll-Werte zu erreichen.

Von Vorteil ist aber auch eine Ausbildung nach Anspruch 17 und/oder 18, da dadurch mit handelsüblichen Komponenten eine leistungsstarke Meßvorrichtung geschaffen ist und bei Bedarf eine rasche Verfügbarkeit von Ersatzkomponenten gegeben ist. Somit können auch eventuelle Ausfälle in kürzester Zeit und vergleichsweise kostengünstig behoben werden.

Von Vorteil ist auch ein mögliches Vorgehen nach Anspruch 20, da dadurch der Abgleich und/oder eine Anpassung der Meßvorrichtung, z.B. aufgrund Veränderungen des Produktes bzw. Meßobjektes, vollautomatisch über das dem Meßsystem zugrunde liegende Software-Programm erfolgen kann

Die Erfindung wird im nachfolgenden anhand der in den Zeichnungen dargestellten Ausführungsbeispiele näher erläutert.

Es zeigen:
- Fig. 1: den Aufbau der erfindungsgemäßen Meßvorrichtung und Sensoranordnung für band- oder plattenförmige Produkte in stark vereinfachter, schematischer Darstellung;
- Fig. 2: die Meßvorrichtung und Sensoranordnung in Seitenansicht, geschnitten gemäß den Linien II-II in Fig. 1;
- Fig. 3: ein Blockschaltbild der erfindungsgemäßen Sensoranordnung in stark vereinfachter, schematischer Darstellung;
- Fig. 4: ein Blockschaltbild der erfindungsgemäßen Meßvorrichtung mit der Sensoranordnung in stark vereinfachter, schematischer Darstellung;
- Fig. 5: ein Blockschaltbild einer Produktionsanlage zur Herstellung von bandförmigen bzw. folienartigen Produkten als bevorzugtes Anwendungsgebiet der erfindungsgemäßen Meßvorrichtung und Sensoranordnung in stark vereinfachter, schematischer Darstellung;
- Fig. 6: eine Ausbildungsvariante der erfindungsgemäßen Sensoranordnung bzw. Meßvorrichtung in stark vereinfachter, schematischer Darstellung.

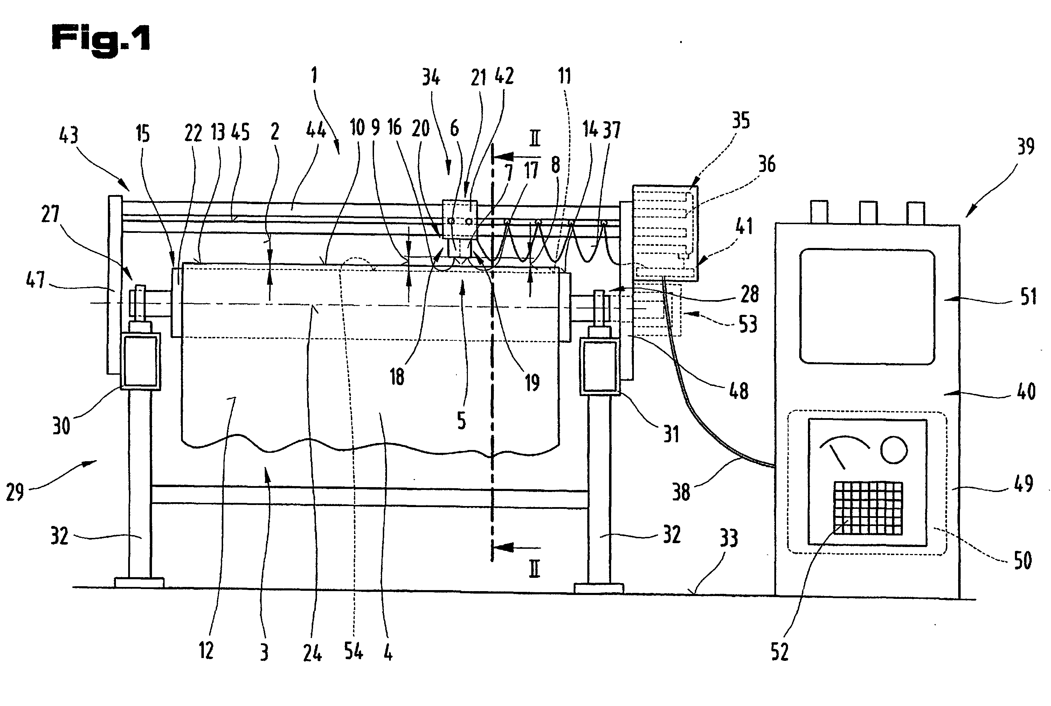

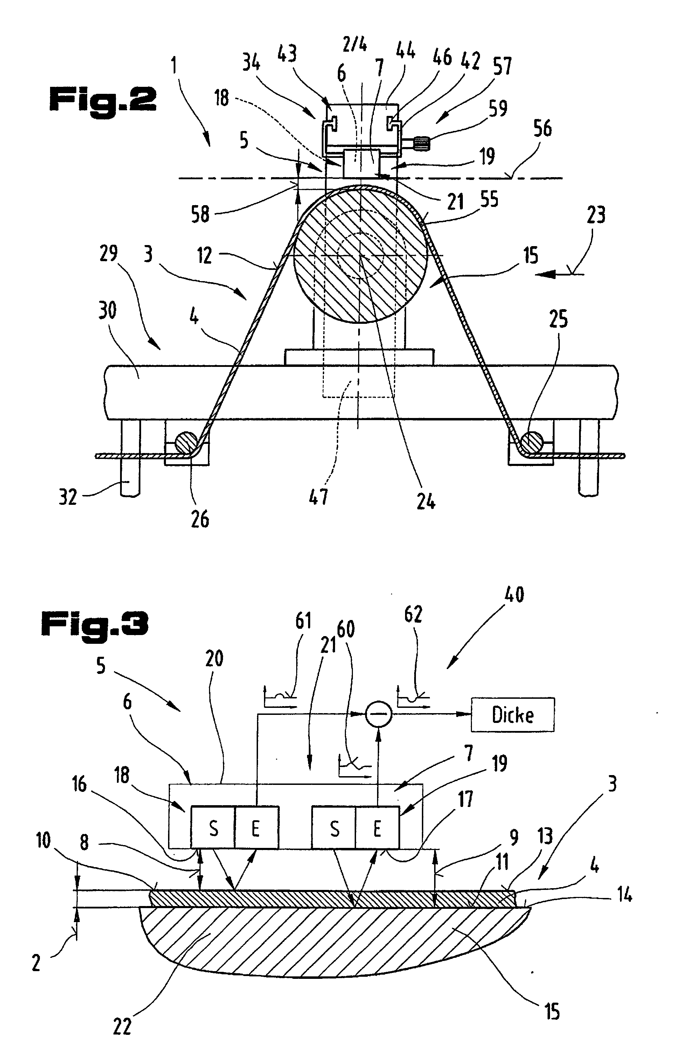

In den Fig. 1 und 2 ist die erfindungsgemäße Meßvorrichtung 1 zur Bestimmung einer Dicke 2 und/oder einer Länge einer Bahn 3, bevorzugt eines Bandes 4, in stark vereinfachter Darstellung zur Verdeutlichung des prinzipiellen Aufbaus gezeigt.

Die Meßvorrichtung 1 umfaßt zur Meßwertaufnahme eine erfindungsgemäße Sensoranordnung 5, welche mehrere Meßwertgeber 6, 7 umfaßt, die unmittelbar benachbart zueinander angeordnet sind und jeweils Distanzen 8, 9 zu den diesen jeweils zugeordneten, unterschiedlichen Referenzstellen 10, 11 erfassen. Die zu erfassenden Distanzen 8, 9 verlaufen dabei bevorzugt zueinander parallel und die beiden Meßrichtungen sind bevorzugt gleich gewählt. Beide Meßwertgeber 6, 7 sind demnach der gleichen Meßachse zugeordnet.

Die Meßwertgeber 6, 7 erfassen also zumindest zwei Relativlagen zu zumindest zwei unterschiedlichen Referenzstellen 10, 11. Die Referenzstellen 10, 11 sind bevorzugt dem Meßobjekt, insbesondere dem Band 4 zugeordnet. Die Referenzstelle 10 ist dabei durch eine Flachseite 12, bevorzugt durch eine Oberseite 13 des Bandes 4 und die Referenzstelle 11 ist bevorzugt durch eine Oberfläche 14 eines Führungsorgans 15 für das Meßobjekt gebildet.

Ausgangspunkte 16, 17 der zu bestimmenden Distanzen 8, 9 sind den Meßwertgebern 6, 7 zugeordnet und sind dabei bevorzugt in der gleichen Ebene angeordnet.

Selbstverständlich ist es auch möglich, die Ausgangspunkte 16, 17 der Meßwertgeber 6, 7 in unterschiedlichen Ebenen festzulegen.

Der Meßwertgeber 6 der Sensoranordnung 5 ist als kapazitiver Sensor 18 und der weitere Meßwertgeber 7 ist als induktiver Sensor 19 bzw. als Wirbelstromsensor ausgebildet. Beide Sensoren 18, 19 unterschiedlichen physikalischen Wirkungsprinzips sind bevorzugt in einem gemeinsamen Gehäuse 20 unmittelbar zueinander benachbart angeordnet, wodurch ein einstückiger Kombinationssensor 21 gebildet ist, der gleichzeitig zumindest zwei Meßwerte in Form von elektrischen Meßsignalen liefern kann. Das Meßobjekt, insbesondere das Band 4, besteht aus Kunststoff und ist bevorzugt durch eine extrudierte Folie mit einer Dicke 2 im Bereich von einigen wenigen Millimetern, beispielsweise mit einer Dicke 2 von 0,01 mm bis 6 mm gebildet. Das Band 4 ist in der Meßzone möglichst spielfrei vom Führungsorgan 15 geführt und für den Fall einer flexiblen, extrudierten Folie durch eine Führungswalze 22 gebildet. Die Führungswalze 22 besteht aus einem metallischen Werkstoff bzw. ist das Führungsorgan 15 mit einem metallischen Überzug versehen. Bevorzugt wird als Werkstoff für das Führungsorgan 15 Aluminium eingesetzt, wobei dieses zusätzlich eine verchromte und/oder hochglanzpolierte Oberfläche 14 mit hoher Abriebfestigkeit aufweisen kann.

Selbstverständlich ist es auch möglich, das Führungsorgan 15, welches zumindest die Referenzstelle 11 zur Distanzermittlung darstellt, durch einen Streifbalken aus bevorzugt metallischen Werkstoffen oder einer Kombination aus nichtmetallischen und metallischen Werkstoffen zu bilden, über welchen das Band 4 abläuft. Umfaßt die Meßvorrichtung 1 als Führungsorgan 15 eine Führungswalze 22, so kann der vom Band 4 eingenommene Umschlingungswinkel im Bereich von 10° bis 180° liegen, bevorzugt beträgt dieser aber in etwa 60°.

Selbstverständlich wäre es auch möglich, das Band 4 tangential zur Oberfläche 14 der Führungswalze 22 verlaufen zu lassen, wobei zumindest eine Berührungslinie quer zu einer Förderrichtung - Pfeil 23 - des Bandes 4 und in etwa parallel zu einer Drehachse 24 der Führungswalze 22 verläuft. Der Kontakt zwischen dem Meßobjekt und dem Führungsorgan 15 ist bevorzugt jedoch großflächig ausgebildet, um gegenseitigen Abrieb möglichst zu verhindern.

Dem der Sensoranordnung 5 zugeordneten Führungsorgan 15 des Bandes 4 ist jeweils ein Umlenkorgan 25, 26, bevorzugt gebildet durch drehbeweglich gelagerte Walzen, zugeordnet, wobei das Umlenkorgan 25 bezogen auf die Förderrichtung - Pfeil 23 - des Bandes 4 dem Führungsorgan 15 vorgeordnet und das Umlenkorgan 26 dem Führungsorgan 15 nachgeordnet ist. Beide Umlenkorgane 25, 26 führen das produzierte, zu messende Band 4 dem Führungsorgan 15 derart zu, daß auf diesem ein Umschlingungswinkel von in etwa 60° erzielt wird. Selbstverständlich ist es auch möglich, einen entsprechenden Umschlingungswinkel mit lediglich einem vor- oder nachgeordneten Umlenkorgan 25 oder 26 zu erreichen.

Die über Lagervorrichtungen 27, 28 drehbar gelagerte Führungswalze 22 ist bevorzugt auf einem Traggestell 29 abgestützt. Das Traggestell 29 umfaßt zumindest einen, bevorzugt zwei profilartige Tragkörper 30, 31, welche über mehrere Stützelemente 32 auf der Aufstandsfläche 33 abgestützt sind.

Die Meßvorrichtung 1 mit der Sensoranordnung 5 ist bezogen auf die Förderrichtung - gemäß Pfeil 23 - des extrudierten Produktes möglichst nahe nach einer entsprechenden Extruderdüse einer Extrusionsanlage angeordnet.

Bezugnehmend auf die übliche Förderrichtung - gemäß Pfeil 23 - nach der Meßvorrichtung 1 ist bevorzugt eine Bandspule zum Aufwickeln des bandartigen Folienproduktes angeordnet.

Die Sensoranordnung 5 mit dem kapazitiven Sensor 18 und dem induktiven Sensor 19 ist über eine Führungsvorrichtung bzw. eine Traversiereinrichtung 34 quer zur Förderrichtung - gemäß Pfeil 23 - und parallel zur Flachseite 12 bzw. Oberseite 13 des Bandes 4 verfahrbar. Zur Bewegung der schlittenartigen Traversiereinrichtung 34 und der darauf plazierten Sensoranordnung 5 bzw. dem darauf montierten Kombinationssensor 21 ist eine Antriebsvorrichtung 35, insbesondere gebildet durch einen Elektromotor 36, bevorzugt in Art eines Schrittmotors vorgesehen. Der Elektromotor 36 steht also mit der Traversiereinrichtung 34 in Antriebsverbindung. Sowohl die Sensoranordnung 5 als auch der Elektromotor 36 sind über Leitungen 37, 38 mit einer Steuereinheit 39, umfassend zumindest eine Auswerteeinheit 40, leitungsverbunden. Die Leitungsverbindung ist bevorzugt elektrischer Art. Selbstverständlich ist es aber auch möglich, optische Leitungsverbindungen zwischen der Sensoranordnung 5 und der Steuereinheit 39 und/oder zwischen einer Antriebssteuerung 41 für die Traversiereinrichtung 34 und der übergeordneten bzw. zentralen Steuereinheit 39 vorzusehen.

Die Traversiereinrichtung 34 umfaßt weiters einen mittels der Antriebsvorrichtung 35 verfahrbaren Aufnahmeschlitten 42 für den Kombinationssensor 21, welcher in einer Führungsvorrichtung 43 spielfrei geführt ist. Die Führungsvorrichtung 43 ist bevorzugt durch ein verwindungssteifes Profil 44 mit zumindest einer Führungsbahn 45 für Führungsorgane 46 des Aufnahmeschlittens 42, wie z.B. Rollen, gebildet. Zur Erzielung der linearen Bewegung der Traversiereinrichtung 34 mit dem Kombintationssensor 21 quer über das Folienband können sämtliche aus dem Stand der Technik bekannte Antriebssysteme, wie z.B. Spindelantriebe, Zahnriemenantriebe oder dgl., eingesetzt werden.

Die Führungsvorrichtung 43, insbesondere das Profil 44, spannt sich quer über das Band 4 und ist mittels Stützelementen 47, 48 bevorzugt an den Tragkörpern 30, 31 des Führungsorgans 15 gehaltert.

Selbstverständlich ist es auch möglich, die Führungsvorrichtung 43, insbesondere das Profil 44, z.B. an einer Deckenkonstruktion abhängend auszubilden oder direkt an der Aufstandsfläche 33 abzustützen. Weiters ist es möglich, den Aufnahmeschlitten 42 bzw. die Traversiereinrichtung 34 derart auszubilden, daß der darauf angeordnete Kombinationssensor 21 bzw. die Sensoranordnung 5 in Längsrichtung des Bandes 4 relativ zu diesem verfahrbar ist, wodurch auch unbewegte Meßobjekte innerhalb deren Längserstreckung vermessen werden können.

Die Sensoranordnung 5 ist der vom Führungsorgan 15 abgewandten Flachseite 12 des Bandes 4 zugeordnet, sodaß das zu vermessende Band 4 zwischen dem Führungsorgan 15 und der Sensoranordnung 5 verläuft.

Die vom Traggestell 29 distanzierte, bevorzugt eigenständige Steuereinheit 39 ist in einem Schaltschrank 49, welcher die gestellten elektromagnetischen Anforderungen erfüllt, untergebracht. Die Steuereinheit 39 mit der Auswerteeinheit 40 ist dabei einerseits mit der Sensoranordnung 5 zur Dicken- und/oder Längenmessung des Bandes 4 und weiters mit Aktoren, wie z.B. mit der Antriebsvorrichtung 35 bzw. deren Antriebssteuerung 41 leitungsverbunden.

Zudem ist die Steuereinheit 39 bzw. Auswerteeinheit 40, welche bevorzugt durch eine Rechnereinheit 50, wie beispielsweise einen Personal-Computer, gebildet ist, mit weiteren Ausgabevorrichtungen 51 und weiteren Eingabevorrichtungen 52 leitungsverbunden.

Die Ausgabevorrichtungen 51 sind dabei optische und/oder akustische Anzeige- bzw. Signalisiervorrichtungen und können zum Beispiel durch einen Monitor, durch Signallampen, Summer oder dgl. gebildet sein.

Selbstverständlich ist es auch möglich, die Rechnereinheit 50 bzw. Auswerteeinheit 40 mit einer Druckereinheit oder einer Datenübertragungsvorrichtung, wie z.B. einem Modem, zur Fernübertragung der Daten zu verbinden.

Die Eingabevorrichtungen 52 können beispielsweise durch eine Tastatur und/oder Schalter oder durch sonstige Eingabevorrichtungen 52, wie z.B. Scanner, Steuerknüppel oder sonstige Steuerorgane gebildet sein.

Selbstverständlich ist es auch möglich, kombinierte Ein- und Ausgabevorrichtungen, z.B. in Art eines Touch-Screen, vorzusehen.

Weiters kann, wie in strichlierten Linien angedeutet, die Führungswalze 22 mit einem von der Steuereinheit 39 gesteuerten Rotationsantrieb 53, z.B. einem Elektro-, Hydraulik- oder Pneumatikmotor, bevorzugt unter Zwischenschaltung einer Getriebeanordnung gekoppelt sein. Der Rotationsantrieb 53 für die Führungswalze 22 kann dabei von der Steuereinheit 39 bevorzugt in beide Drehrichtungen versetzt werden, wodurch z.B. auf die Förderzustände und auch auf die Spannungsverhältnisse des Bandes 4 Einfluß genommen werden kann.

Die Meßwertgeber 6, 7 der Sensoranordnung 5 sind in einer zur Förderrichtung - Pfeil 23 - des Bandes 4 und in einer zu einer Berührungslinie 54 bzw. zu einer Berührungsfläche 55 parallel verlaufenden Ebene 56 auf der vom Führungsorgan 15 abgewendeten Seite des Bandes 4 angeordnet.

Die Ausgangspunkte 16, 17 der Meßwertgeber 6, 7 können mittels einer Justiervorrichtung 57 in einem voreinstellbaren Abstand 58 von der Oberfläche 14 am Führungsorgan 15 angeordnet sein. Diese Justiervorrichtung 57 zur Höhenveränderung der Ebene 56, also zur Veränderung der Relativlage der Sensoranordnung 5 bezugnehmend auf das Führungsorgan 15, kann beispielsweise durch eine Spindel-, Schraub- und/oder eine Klemmvorrichtung gebildet sein, über welche die Meßwertgeber 6, 7 der Sensoranordnung 5 in unterschiedliche Höhenlagen verstell- und feststellbar sind.

Die Betätigung der Justiervorrichtung 57 erfolgt bevorzugt manuell über ein rad- oder walzenförmiges Stellelement 59, welches auf einen Führungsschlitten mit vertikaler Führung translatorisch einwirkt.

Selbstverständlich ist es aber auch möglich, der Justiervorrichtung 57 zur Veränderung der Relativlage zwischen der Sensoranordnung 5 und dem Meßobjekt bzw. dem Führungsorgan 15 eine elektromotorische oder pneumatische Antriebsvorrichtung zuzuordnen, welche mit der Steuereinheit 39 oder mit der Antriebssteuerung 41 am Traggestell 29 leitungsverbunden ist und ausgehend von diesen Komponenten entsprechend gesteuert wird.

Unabhängig vom bevorzugten Einsatzgebiet zur Überwachung und/oder Regelung eines Extrusionsprozesses bei der Produktion von Kunststoffolien kann die erfindungsgemäße Sensoranordnung 5 beispielsweise auch zur Überwachung und/oder Regelung der Materialstärke von plattenförmigen Produkten, wie z.B. in Kalt- oder Warmwalzwerken bei der Produktion oder Verarbeitung von metallischen und auch nichtmetallischen Plattenteilen, eingesetzt werden.

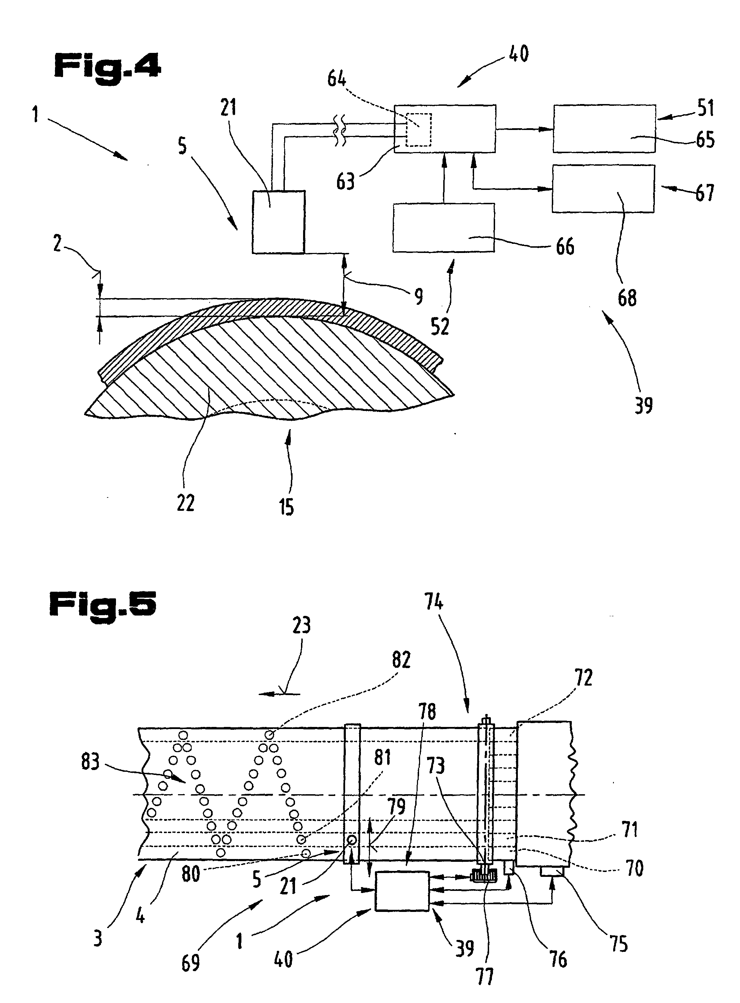

In den Fig. 3, 4 ist der prinzipielle Zusammenhang sowie die Wirkungsweise der einzelnen Teilkomponenten der Meßvorrichtung 1 anhand von Blockschaltbildern verdeutlicht.

Zudem ist die physikalische Wirkungsweise der beiden, in einem gemeinsamen Gehäuse 20 angeordneten Meßwertgeber 6, 7 entnehmbar. Der induktive Sensor 19 mißt dabei aufgrund seiner physikalischen Eigenschaften unbeeinflußt durch die Folie bzw. das Band 4 durch und ermittelt ständig die Distanz 9 zum Führungsorgan 15 bzw. zur rotierenden Führungswalze 22. Die Messung erfolgt dabei nach dem Wirbelstrom verfahren, bei dem das im Magnetfeld des induktiven Sensors 19 befindliche Führungsorgan 15 durch die fließenden Wirbelströme im leitfähigen Führungsorgan 15 eine Veränderung des Magnetfeldes bewirkt. Diese Magnetfeldveränderungen können mit zumindest einem Feldplatten-Differentialfühler gemessen und verzögerungsfrei in ein elektrisches Ausgangssignal 60 umgewandelt werden, welches der Distanz 9 entspricht bzw. auch proportional zur Distanz 9 ist. Mit dem induktiven Sensor 19 ist also eine berührungslose Messung sämtlicher Linearbewegungen zwischen diesem und dem Führungsorgan 15 möglich, wie diese z.B. durch Vibrationen, unwuchte Führungswalzen oder durch Verschleißerscheinungen auftreten können. Weitere mechanische Einflüsse, wie z.B. ein Höhenschlag der Führungswalze, Variationen im Abstand des induktiven Sensor 19 zum Führungsorgan usw., werden dabei auch erfaßt und durch das Ausgangssignal 60 repräsentiert. Das Ausgangssignal 60 ist bevorzugt durch ein Spannungssignal gebildet und kann in Abhängigkeit der vorliegenden Distanz 9 eine elektrische Spannung in der Höhe von z.B. 0 bis 10 Volt aufweisen. Die Amplitude des Ausgangssignals 60 variiert bevorzugt innerhalb eines verhältnismäßig hohen Spannungsbereiches, wodurch eine Auswertung desselben in einfacher Art und Weise mit handelsüblichen Komponenten der Digitaltechnik, z.B. A/D-Wandlern, vorgenommen werden kann. Selbstverständlich ist es auch möglich, daß das Ausgangssignal 60 in einem engen Wertebereich variiert und diese geringfügigen Zustandsänderungen von hochempfindlichen Auswertevorrichtungen erfaßt werden.

Selbstverständlich ist es auch möglich, die Induktivität L des induktiven Sensors 19 bzw. die Veränderung der Induktivität L in Folge der Schwankungen der Distanz 9 zwischen dem induktiven Sensor 19 und dem Führungsorgan 15, das dabei einem bewegten Eisenkern der Spule des induktiven Sensors 19 entspricht, zur Bestimmung der Distanz 9 heranzuziehen. Nachdem das Führungsorgan 15 die Induktivität L des induktiven Sensors 19 bzw. dessen Spule verändert, ist es auch möglich, anhand der physikalischen Zusammenhänge zwischen dem Spulenstrom, der Spulenspannung, einem bestimmten elektrischen Widerstand, der Zeitkonstanten τ , der natürlichen Zahl e oder anhand sonstiger physikalischer und elektrischer Größen und deren formelmäßigen Zusammenhang die Distanz 9 zu berechnen. Beispielsweise können die physikalischen und elektrotechnischen Gesetzmäßigkeiten einer Spule in einem Gleichstromkreis beim An- und Abschalten derselben an eine Gleichspannung zur Ermittlung der Distanz 9 herangezogen werden.

Der kapazitive Sensor 18 des Kombinationssensors 21 mißt ebenfalls durch das Band 4 bzw. durch die Folie durch und dessen Ausgangssignal 61 ist abhängig vom Abstand des kapazitiven Sensors 18 zum Führungsorgan 15 und von der Dicke 2 des Meßobjektes bzw. der Kunststoffolie. Das Meßobjekt bzw. das Band 4 nimmt dabei die Stellung des Dielektrikums in einem Kondensator ein. Das heißt, der kapazitive Sensor 18 reagiert auf Änderungen der elektrischen bzw. magnetischen Größe Epsilon. Der Epsilon-Wert des jeweiligen Dielektrikums, der z.B. durch das Kunststoffband oder auch eine Metallfolie bestimmt sein kann, hat entsprechend den physikalischen und elektrotechnischen Gesetzmäßigkeiten Einfluß auf den Kapazitätswert des kapazitiven Sensors 18. Gleichfalls hat entsprechend der formelmäßigen Zusammenhänge die Dicke des Dielektrikums, welche der Dicke 2 des Meßobjektes entspricht, Einfluß auf die Kapazität des kapazitiven Sensors 18. Unter Ausnutzung dieses physikalischen Effektes liefert der kapazitive Sensor 18 also ein Ausgangssignal 61, welches vom Abstand des kapazitiven Sensors 18 zur Walze und von der Dicke 2 des Meßobjektes bzw. der Bahn 3 abhängig ist. Demnach ist es über den kapazitiven Sensor 18 möglich, das Vorhandensein und somit auch die Länge der Bahn 3 festzustellen.

Der kapazitive Sensor 18 kann dabei in Art eines Plattenkondensators aufgebaut sein, wobei die eine Kondensatorplatte dem kapazitiven Sensor 18 zugeordnet ist und die weitere Kondensatorplatte durch das Führungsorgan 15, z.B. durch die Oberfläche 14 der Führungswalze 15 gebildet ist und das Dielektrikum mit dem jeweiligen Dielektrizitätskennwert Epsilon durch das Meßobjekt bzw. die zu messende Folie gebildet ist, die zwischen den beiden Kondensatorplatten bzw. zwischen dem Sensor 18 und dem Führungsorgan 15 hindurchgeführt wird. Grundlegend kann festgehalten werden, daß die Kapazität eines Plattenkondensators von der Fläche der Kondensatorplatten, von ihrem Abstand zueinander, d.h. somit von der Distanz 9 und von der Dielektrizitätszahl Epsilon, die im Fall von Luft den Wert 1 annimmt, sowie von der Dicke des Dielektrikums, demnach der Dicke der Bahn 3, abhängig ist.

Mittels den allgemein bekannten formelmäßigen Zusammenhängen von Kondensatoren in Stromkreisen, z.B. in Gleichstromkreisen, kann dann auf die Dicke 2 des Meßobjektes bzw. der Bahn 4 geschlossen werden. Derartige physikalische Größen sind z.B. die Zeitkonstante τ, ein bestimmter elektrischer Widerstand, der Kondensatorstrom, die natürliche Zahl e und sonstige physikalische Größen, die einen Entlade- bzw. Ladevorgang eines Kondensators formelmäßig beschreiben.

Die beiden Ausgangssignale 60, 61 der Sensoren 18, 19 werden derart ausgewertet, daß ein Differenzsignal 62 der Dicke 2 des Meßobjektes bzw. des Folienbandes entspricht. Beide Sensorsignale werden z.B. arithmetisch derart verknüpft, daß das Differenzsignal 62 streng proportional zur Dicke 2 der Kunststoffolie ist. Durch diese Differenzsignalbildung werden mechanische Störungen, wie z.B. ein Höhenschlag der Führungswalze 22, Ungenauigkeiten im Abstand des Sensors zur Walze, diverse Vibrationen usw., ausgeglichen. Diese Methode der Differenzsignalbildung für die hochpräzise Messung der Dickenverläufe entkoppelt also mechanische Störeinflüsse, wodurch die tatsächliche Dicke 2 des Objektes mit einer Auflösung von wenigen µm erfaßt werden kann. Somit ist das Meßergebnis z.B. auch unabhängig von einem sich aufbauenden Luftpolster zwischen dem zu messenden Produkt und dem Führungsorgan 15 bzw. der Führungswalze 22, was besonders bei hohen Fördergeschwindigkeiten sowie bei breiten und luftundurchlässigen Materialien auftreten kann. Diese äußeren Einflüsse können somit das Meßergebnis nicht verfälschen und daher wird eine im Vergleich zu herkömmlichen Meßanordnungen exaktere Ist-Wertbestimmung erreicht. Das grundlegende Meßprinzip der Sensoranordnung 5 entspricht dabei einer Dielektrizitätsbestimmung in einem Kondensator. Der induktive Teil des Kombinationssensors 21 mißt in derselben Bezugsachse die aktuelle Distanz 9 zwischen der Sensorbezugsebene bzw. zwischen dem Ausgangspunkt 17 und der Oberfläche 14 des Führungsorgans 15. Durch diese Anordnung bzw. durch diese Methode werden mechanische Störungen wie Rundlaufungenauigkeiten oder Vibrationen zur Gänze ausgeglichen, wodurch hohe Meßgenauigkeiten und eine exakte Reproduzierbarkeit erzielt werden.

Die Differenzsignalbildung kann entweder physikalisch durch Überlagerung des Ausgangssignales 60 mit positiver Spannungsamplitude mit dem Ausgangssignal 61 mit negativer Spannungsamplitude erfolgen. Ebenfalls ist es möglich, die beiden analogen Ausgangssignale der beiden Meßwertgeber 6, 7 zumindest einem A/D-Wandler zuzuführen, welcher mit einem Mikrocontroller verbunden ist und die Differenzsignalbildung bzw. die Differenzwertbildung rein rechnerisch gemäß der vom Mikrocontroller abzuarbeitenden Softwaremodule auszuführen.

In Fig. 4 ist ein weiteres Blockschaltbild der Sensoranordnung 5 im Zusammenhang mit der Steuereinheit 39 bzw. der Auswerteeinheit 40 gezeigt.

Hierbei ist ersichtlich, daß die Sensoranordnung 5 bzw. der Kombinationssensor 21 mit der Steuereinheit 39 bzw. der Auswerteeinheit 40, die bevorzugt durch einen Personal-Computer 63 gebildet ist, leitungsverbunden ist. Dieser Personal-Computer 63 ist mit einer Schnittstellenkarte 64 ausgerüstet, die die von der Sensoranordnung 5 empfangenen Ausgangssignale 60, 61 aufbereitet und die jeweiligen Daten der Ausgangssignale 60, 61 dem Personal-Computer 63 bzw. dessen Mikroprozessor zur weiteren Verarbeitung und Verwaltung bereitstellt. Die dem Personal-Computer 63 ständig zur Verfügung stehenden Prozeßdaten werden von diesem verarbeitet und verwaltet. Der Personal-Computer 63 ist weiters mit der Ausgabevorrichtung 51, bevorzugt in Art eines Monitors 65, leitungsverbunden, um die jeweiligen Prozeßdaten, z.B. in graphischer Form, visualisieren können.

Weiters ist dem Personal-Computer 63 die mit diesem leitungsverbundene Eingabevorrichtung 52, bevorzugt in Art einer Tastatur 66, zugeordnet, mittels welcher der Ablauf der gesamten Meßvorrichtung 1 beeinflußt werden kann. So ist es z.B. möglich, über die Eingabevorrichtung 52 verschiedene Visualisierungsarten zu wählen oder Konfigurationsänderungen vorzunehmen.

Weiters ist der Auswerteeinheit 40 eine Speichervorrichtung 67 zugeordnet bzw. umfaßt der Personal-Computer 63 ein beschreib- und löschbares Speichermedium, z.B. in Art einer Festplatte 68, über welches die Prozeßdaten über einen längeren Zeitraum gespeichert oder lediglich zwischengespeichert werden können.

Selbstverständlich ist es auch möglich, die Auswerteeinheit 40 bzw. den Personal-Computer 63 in ein lokales oder auch globales Netzwerk einzubinden und System- und/oder Prozeßdaten mit einem übergeordneten Server auszutauschen.

Als Schnittstelle zwischen diesen Einheiten wird entweder ein Modem oder eine Netzwerkkarte eingesetzt. Die Auswerteeinheit 40 erstellt zu den empfangenen Prozeßdaten beliebige Interpretationsmittel bzw. berechnet diese einfache statistische Kenngrößen, wie Mittelwert und Standardabweichung. Selbstverständlich ist es auch möglich, beliebige andere statistische Kenngrößen, wie z.B. die Normalverteilung der Meßwerte, zu ermitteln.

Bevorzugt ist das Führungsorgan 15 als Vollkörper ausgebildet. Selbstverständlich ist es aber, wie in Fig. 4 in strichlierten Linien angedeutet, auch möglich, das Führungsorgan 15 als Hohlkörper, z.B. als Hohlwelle aus Aluminium, auszubilden.

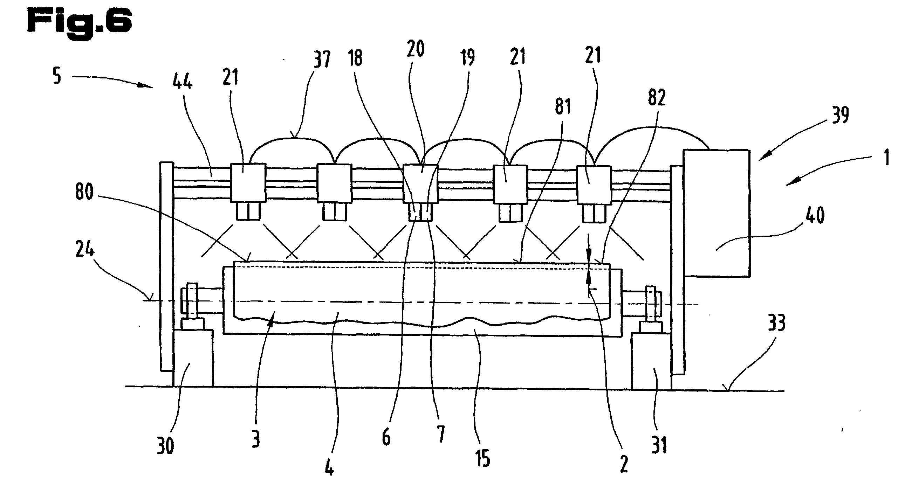

Fig. 5 zeigt anhand eines stark vereinfachten Blockschaltbildes den Aufbau einer Extrusionsanlage 69, bei welcher die erfindungsgemäße Sensoranordnung 5 und die Meßvorrichtung 1 eingesetzt ist. Das bevorzugte Einsatzgebiet der Meßvorrichtung 1 ist dabei die Erzeugung von Folien aus Polypropylen bzw. Polyethylen. Wie an sich bekannt, wird hierbei flüssiger bzw. zähflüssiger Kunststoff des Extruders mit Hilfe einer Druckerzeugungsvorrichtung durch mehrere, nebeneinander angeordnete Düsen 70 bis 72 gepreßt und nachfolgend auf zumindest eine Glättwalze 73 einer Kalanderstraße 74 zur Formung der Bahn 3 bzw. des Bandes 4 aufgebracht. In Förderrichtung - gemäß Pfeil 23 - der zu erzeugenden Kunststoffolie bzw. Bahn 3 unmittelbar nach der Kalanderstraße 74 ist die Meßvorrichtung 1 mit der Sensoranordnung 5 plaziert. Die Steuereinheit 39 ist dabei zur Meßwertaufnahme mit der Sensoranordnung 5 bzw. mit dem Kombinationssensor 21 leitungsverbunden. Weiters ist die Steuereinheit 39 bzw. die Auswerteeinheit 40 mit verschiedenen Komponenten der Kalanderstraße 74 und/oder mit Antriebs- und/oder Stellvorrichtungen des Extruders zusammengeschaltet. Bevorzugt ist dabei die Steuereinheit 39 mit der Druckerzeugungsvorrichtung 75, insbesondere mit einer Antriebsvorrichtung einer Extruderschnecke des Extruders und mit einer Verstellvorrichtung 76 zur Veränderung des Düsenspaltes der Düsen 70 bis 72 und/oder mit einer Antriebsvorrichtung 77 zur Veränderung der Walzengeschwindigkeit und/oder des Walzenabstandes leitungsverbunden. Die Überwachung und/oder Steuerung der zuvor erwähnten Parameter ist für die Gewährleistung einer konstanten Dicke der Bahn 3 bzw. der Folie erforderlich. Die erfindungsgemäße Sensoranordnung 5 und die vorerwähnten Aktoren des Extruders bzw. der Kalanderstraße 74 sind also über die Steuereinheit 39 bzw. über die Auswerteeinheit 40 zu einem Regelkreis 78, welcher eine konstante Foliendicke unter beinahe sämtlichen Betriebszuständen gewährleistet, zusammengeschaltet.

Selbstverständlich ist es auch möglich, im Bereich des Extruders oder im Bereich der Kalanderstraße 74 weitere Sensoren, z.B. für die Fließgeschwindigkeit oder den Druck des zu verarbeitenden Materials vorzusehen und diese zusätzlichen Meßwertaufnehmer mit der Steuereinheit 39 zusammenzuschalten und so eine weitere Sensorebene aufzubauen. Weiters ist es möglich, in Förderrichtung - gemäß Pfeil 23 - mehrere Sensoranordnungen 5 vorzusehen, welche mit zumindest einer Auswerteeinheit 40 leitungsverbunden sind und die aktuell vorliegenden Dicken- und/oder Längenmeßwerte aufnehmen und übermitteln. In Fortbewegungsrichtung - gemäß Pfeil 23 - nach jeder Sensoranordnung 5 kann gegebenenfalls eine Kalanderanordnung mit veränderbarem Walzenspalt zur Einstellung und Nachjustierung der geforderten Dicke der Bahn 3 vorgesehen sein.

Selbstverständlich ist es anstelle des beschriebenen, geschlossenen Regelkreises 78 zur sofortigen Ausregelung bestimmter Abweichungen in der Foliendicke auch möglich, lediglich Anzeigefunktionen mit der erfindungsgemäßen Meßvorrichtung 1 zu realisieren und vom Bedienpersonal der Extrusionsanlage 69 die notwendigen Parameteränderungen manuell vornehmen zu lassen. Hierzu können vom Bedienpersonal der Extrusionsanlage 69 an der Steuereinheit 39 Warn- bzw. Eingriffsgrenzen individuell eingestellt werden. Das über- bzw. unterschreiten dieser Warn- bzw. Eingriffsgrenzen wird dann von der Steuereinheit 39 bzw. der Auswerteeinheit 40 optisch und/oder akustisch angezeigt, sodaß daraufhin das Bedienpersonal die entsprechende Parameteränderung vornehmen kann. Bevorzugt ist der Verlauf der aktuell gemessenen Dicke der Bahn 3 an entsprechenden Ausgabevorrichtungen 51 der Steuereinheit 39 optisch dargestellt und das Über- bzw. Unterschreiten der eingestellten Warn- bzw. Eingriffsgrenze wird ebenfalls optisch durch entsprechend gefärbte Signallampen angezeigt.

Zur Messung der Foliendicke wird der Kombinationssensor 21 quer zur Breite der Folie entsprechend einem Doppelpfeil 79 bewegt und die dabei aufgenommenen Meßwerte werden in einem Array der Steuereinheit 39 zwischengespeichert, um nachfolgend von der Auswerteeinheit 39 verarbeitet werden zu können. Der entsprechend dem Doppelpfeil 79 traversierende Kombinationssensor 21 wird dabei von der Steuereinheit 39 derart gesteuert, daß eine ausreichend hohe Anzahl von Meßwerten in Abhängigkeit der Folienbreite vorliegt. Bevorzugt wird je Extrusionsdüse jeweils ein Meßwert erfaßt und im vorgenannten Array der Steuereinheit 39 zwischengespeichert, sodaß nach der Auswertung dieser Meßwerte über die Verstellvorrichtung 76 der Düsenspalt der jeweiligen Düse 70 bis 72 gezielt verändert werden kann.

Für die Meßwertaufnahme muß die an der Sensoranordnung 5 vorbeilaufende Bahn 3 nicht gestoppt werden. In Abhängigkeit der Bandgeschwindigkeit ist also zumindest ein Meßfleck 80 bis 82 gebildet, dessen Breite unter anderem von der Anzahl der Düsen 70 bis 72 und dessen Länge vor allem von der Bandgeschwindigkeit abhängt. Die Dickenänderungen innerhalb eines Meßfleckes 80 bis 82 werden dabei gemittelt und dieser Mittelwert für die Foliendicke pro Meßfleck 80 bis 82 in das Array bzw. in die Tabelle übertragen. Die Anzahl der Spalten der Tabelle bzw. des Array ist von der Folienbreite bzw. von der Anzahl der Düsen 70 bis 72 abhängig und die Anzahl der Zeilen der Tabelle bzw. des Array hängt von der Länge des Bandes bzw. von der Abtastfrequenz der Sensoranordnung 5 ab. Die Dicke der Folie innerhalb eines jeden Meßfleckes 80 bis 82 ist also bereits ein Mittelwert der Dicken des Bandes 3 innerhalb des jeweiligen Meßfleckes 80 bis 82. Durch die kontinuierliche Bewegung der zu messenden Folie und durch die traversierende hin- und rückläufige Bewegung des Kombinationssensors 21 - gemäß Doppelpfeil 79 - entsteht ein wellen- oder dreieckförmiges Abtastmuster 83, verteilt über die gesamte Breite und Länge der erzeugten Bahn 3.

Nach jedem Meßdurchlauf, d.h. nach Erfassung der ausreichend hohen Anzahl an Meßwerten pro Folienbreite, wird die graphische Darstellung der Foliendicke an der Ausgabevorrichtung 51 aktualisiert. Weiters werden sämtliche Meßwerte innerhalb der gesamten Folienlänge gespeichert, um langfristige Trends einer prozeßbedingten Dickenänderung beobachten und geeignete Gegenmaßnahmen ergreifen zu können.

Nach Fertigstellung einer Produktionseinheit, welche im Allgemeinen durch eine Rolle einer bestimmten Länge des Bandes 4 gebildet ist, wird eine Auswertung der einzelnen Informationen über die Ausgabevorrichtung 51 ausgedruckt und dem fertigen Produkt als Beipack beigefügt.

Zur Auswertung der erfaßten Meßwerte sind dabei sämtliche aus dem Stand der Technik bekannte Methoden möglich. So ist es z.B. möglich, diverse Regelkartenauswertungen, z.B. nach Ford oder nach Continental, vorzunehmen oder auch die Normalverteilung zur Interpretation der Produktqualität zu überprüfen.

Fig. 6 zeigt eine weitere, insbesondere eigenständige Ausbildungsvariante der erfindungsgemäßen Sensoranordnung 5.

Hierbei umfaßt die Meßvorrichtung 1 mehrere zueinander beabstandete Sensoranordnungen 5 bzw. Kombinationssensoren 21. Diese Mehrzahl an Kombinationssensoren 21 erstreckt sich dabei über die gesamte Breite der Bahn 3, sodaß diese ohne dem Erfordernis einer Traversiereinrichtung 34 über die gesamte Breite abgetastet werden kann. Die Anzahl der nebeneinander angeordneten Kombinationssensoren 21 entspricht dabei bevorzugt wiederum der Anzahl der Extrusionsdüsen. Bevorzugt sind die in Längsrichtung der Führungsfläche für das Band 4 aufgeteilten Sensoranordnungen 5 in einem einstellbaren Abstand zueinander angeordnet, sodaß die Meßflecken 80 bis 82 der Kombinationssensoren 21 bevorzugt die gesamte Breite der Bahn 3 abdecken.

Wie in Fig. 6 schematisch dargestellt, ist es auch möglich, daß die Meßflecken 80 bis 82 bezogen auf die Längsrichtung der Führungsfläche für das Band 4 einander überlappen. Jeder Kombinationssensor 21 ist dabei über die Leitung 37 mit der Steuereinheit 39 bzw. der Auswerteeinheit 40 verbunden. Über die Auswerteeinheit 40 können die von den Kombinationssensoren 21 gelieferten Meßwerte entweder sequentiell oder auch gleichzeitig erfaßt und für die nachfolgende Auswertung und graphische Darstellung zwischengespeichert werden.

Zur Messung der Dicke 2 der Bahn 3 wird die Bahngeschwindigkeit unverändert beibehalten, sodaß ein in Abhängigkeit der Bahngeschwindigkeit gebildetes Muster von Meßflecken 80 bis 82 am Meßobjekt resultiert. Die Dicke 2 der Bahn 3 innerhalb eines jeden Meßfleckes 80 bis 82 wird dabei wiederum vom Kombinationssensor 21 gemittelt.

Des weiteren ist es möglich, über die Sensoranordnung 5, wie dies in den Fig. 1 bis 6 beschrieben ist, die Breite der Bahn 3 zu ermitteln.

Selbstverständlich ist es auch möglich, an der in den Figuren 1 und 2 dargestellten Traversiereinrichtung 34 bzw. an dessen Aufnahmeschlitten 42 mehrere im Abstand zueinander angeordnete Sensoranordnungen 5 vorzusehen.

Selbstverständlich ist es auch möglich, mehrere Traversiereinrichtungen 34 mit zumindest einem Kombinationssensor 21 vorzusehen, wobei dann ein Längsverstellweg jeder Sensoranordnung 5 bzw. eines jeden Aufnahmeschlittens 42 zumindest einem der Anzahl der Sensoranordnung 5 entsprechenden Bruchteil der Breite des Bandes 4 entspricht.

Der Ordnung halber sei abschließend darauf hingewiesen, daß zum besseren Verständnis des Aufbaus der Sensoranordnung 5 und der Meßvorrichtung 1 diese bzw. deren Bestandteile teilweise unmaßstäblich verzerrt und vergrößert dargestellt wurden.

## Patentansprüche

1. Regelungsvorrichtung der Dicke einer aus zumindest einer Düse (70 bis 72) eines Extruders austretenden Bahn (3) aus Kunststoff mit einer Sensoranordnung (5), die an einer Traversiereinrichtung (34) quer zur Förderrichtung und parallel zu einer Oberseite (13) der Bahn (3) verfahrbar angeordnet ist und die zur Übermittlung von Ausgangssignalen (60, 61), insbesondere einer Ausgangsspannung, mit einer Auswerteeinheit (40) leitungsverbunden ist, wobei die Auswerteeinheit (40) mit einer Verstellvorrichtung (76), zur Veränderung der Dicke der Bahn (3) zu einem Regelkreis (78) zusammengeschaltet ist, **dadurch gekennzeichnet, daß** die Bahn (3) aus Kunststoff zwischen der Sensoranordnung (5) und einer Führungswalze (22), auf der sich die Bahn (3) abstützt, hindurchgeführt ist und die Sensoranordnung (5) einen kapazitiven und einen induktiven Sensor (18, 19) umfaßt, wobei die Führungswalze (22) eine Gegenelektrode des kapazitiven Sensors (18) bildet.

2. Vorrichtung nach Anspruch 1, **dadurch gekennzeichnet, daß** die Führungswalze (22) aus Aluminium besteht.

3. Vorrichtung nach Anspruch 1 oder 2, **dadurch gekennzeichnet, daß** die Führungswalze (22) eine verchromte Oberfläche aufweist.

4. Vorrichtung nach einem der vorhergehenden Ansprüche, **dadurch gekennzeichnet, daß** die Führungswalze (22) mit einem Rotationsantrieb (53) gekuppelt ist.

5. Vorrichtung nach einem der vorhergehenden Ansprüche, **dadurch gekennzeichnet, daß** die beiden Sensoren (18, 19) in Förderrichtung - Pfeil (23) - der Bahn (3) unmittelbar hintereinander angeordnet sind.

6. Vorrichtung nach einem der Ansprüche 1 bis 4, **dadurch gekennzeichnet, daß** die beiden Sensoren (18, 19) in etwa senkrecht zur Förderrichtung der Bahn (3) nebeneinander angeordnet sind.

7. Vorrichtung nach einem der vorhergehenden Ansprüche, **dadurch gekennzeichnet, daß** die Sensoren (18, 19) mit ihrer für die Distanzmessung definierten Ebene (56) parallel zur Oberseite (13) der Bahn (3) angeordnet sind.

8. Vorrichtung nach einem der vorhergehenden Ansprüche, **dadurch gekennzeichnet, daß** die Sensoren (18, 19) in der zur Förderrichtung der Bahn (3) und in der zur Berührungslinie (54) bzw. -fläche (55) zwischen der Führungswalze (22) und der Bahn (3) parallel verlaufenden Ebene (56) auf der von der Führungswalze (22) abgewendeten Oberseite (13) der Bahn (3) angeordnet sind.

9. Vorrichtung nach einem der vorhergehenden Ansprüche, **dadurch gekennzeichnet, daß** Ausgangspunkte (16, 17) der Sensoren (18, 19) in voreinstellbarem Abstand von der Berührungsfläche (55) der Bahn (3) an der Führungswalze (22) angeordnet sind.

10. Vorrichtung nach Anspruch 9, **dadurch gekennzeichnet, daß** in der Auswerteeinheit (40) die Differenzwerte zwischen den Ausgangssignalen (60, 61) der beiden Sensoren (18, 19) ermittelt sind und in Abhängigkeit von zuvor ermittelten Referenzwerten für bestimmte Dicken (2) der Bahn (3) die Ist-Dicken der Bahn (3) festgestellt sind.

11. Vorrichtung nach einem der vorhergehenden Ansprüche, **dadurch gekennzeichnet, daß** ein Aufnahmeschlitten (42) der Traversiereinrichtung (34) für die Sensoranordnung (5) über eine Antriebsvorrichtung (35) quer zur Förderrichtung der Bahn (3) verstellbar ausgebildet ist.

12. Vorrichtung nach Anspruch 11, **dadurch gekennzeichnet, daß** der Aufnahmeschlitten (42) auf einer parallel zur Oberseite (13) der Bahn (3) verlaufenden Führungsbahn in Längsrichtung relativ zur Bahn (3) verschiebbar angeordnet ist.

13. Vorrichtung nach einem der vorhergehenden Ansprüche, **dadurch gekennzeichnet, daß** quer zur Förderrichtung - Pfeil (23) - der Bahn (3) mehrere Sensoranordnungen (5) in einem vorbestimmten oder voreinstellbaren Abstand zueinander angeordnet sind.

14. Vorrichtung nach Anspruch 13, **dadurch gekennzeichnet, daß** Meßflecken (80 bis 82) der einander quer zur Förderrichtung für die Bahn (3) unmittelbar nebeneinander angeordneten Sensoranordnungen (5) bezogen auf diese Querrichtung überlappend angeordnet sind.

15. Vorrichtung nach Anspruch 11 oder 12, **dadurch gekennzeichnet, daß** ein Verstellweg der Sensoranordnungen (5) einem der Anzahl der Sensoranordnungen (5) entsprechenden Bruchteil der Breite der Bahn (3) entspricht.

16. Vorrichtung nach einem der vorhergehenden Ansprüche, **dadurch gekennzeichnet, daß** die Verstellvorrichtung (76) zur Veränderung eines Austrittsspaltes zumindest einer der Düsen (70 bis 72) ausgebildet ist.

17. Vorrichtung nach einem der vorhergehenden Ansprüche, **dadurch gekennzeichnet, daß** die Auswerteeinheit (40) durch einen Rechner, insbesondere einen Personal-Computer (63), mit einer Ausgabevorrichtung (51) zur Anzeige des Dickenverlaufes der Bahn (3) in und/oder quer zur Förderrichtung der Bahn (3) gebildet ist.

18. Vorrichtung nach Anspruch 17, **dadurch gekennzeichnet, daß** der Personal-Computer (63) über eine Schnittstellenkarte (64) mit der Sensoranordnung (5) und weiters mit einer Eingabevorrichtung (52), insbesondere einer Tastatur (66), verbunden ist.

19. Verfahren zur Regelung der Dicke einer aus zumindest einer Düse (70 bis 72) eines Extruders austretenden Bahn (3) aus Kunststoff, bei dem die Dicke der Bahn (3) mit einer Sensoranordnung (5) gemessen wird und die Meßwerte an eine Auswerteeinheit (40) weitergeleitet werden, und wobei die Auswerteeinheit (40) Signale an eine Verstellvorrichtung (76) zur Veränderung der Dicke der Bahn (3) übermittelt, **dadurch gekennzeichnet, daß** die Bahn (3) zwischen der Sensoranordnung (5) und einer Führungswalze (22) hindurchbewegt wird, wobei sich die Bahn (3) auf der Führungswalze (22) abstützt, und daß die Dicke der Bahn (3) mit einem kapazitiven Sensor (18) durch Messung der Distanz zur Führungsfläche der Führungswalze (22) erfaßt und in einem ersten Ausgangssignal repräsentiert wird und daß anhand des ersten Ausgangssignals vom kapazitiven Sensor (18) in Korrelation mit einer von einem induktiven Sensor (19) festgestellten Distanz zur Führungsfläche der Führungswalze (22), wobei diese Distanz durch ein zweites Ausgangssignal repräsentiert ist, Differenzwerte in der Auswerteeinheit (40) ermittelt werden und die ermittelten Differenzwerte mit zuvor für die Bahn (3) ermittelten Referenzwerten für unterschiedliche Dicken verglichen werden und somit die Ist-Dicke der Bahn (3) festgestellt wird und daß das Differenzsignal bzw. zumindest den Kennwert davon vor der Weiterleitung an die Verstelleinrichtung (76) über die Auswerteeinheit (40) mit einem Anpassungsfaktor multipliziert wird, welcher durch eine Referenzmessung an einem Referenzstück der zu messenden Bahn (3) gewonnen wird.

20. Verfahren nach Anspruch 19, **dadurch gekennzeichnet, daß** das erste und zweite Ausgangssignal derart arithmetisch verknüpft werden, daß das Differenzsignal streng proportional zur Dicke der Bahn (3) ist.

## Claims

1. Device for regulating the thickness of a web (3) of plastics material leaving at least one nozzle (70 to 72) of an extruder, with a sensor system (5) which is arranged on a traversing system (34) so as to be displaceable transversely to the feed direction and parallel with a top face (13) of the web (3), and which is wired to an evaluation unit (40) for transmitting output signals (60, 61), in particular an output voltage, the evaluation unit (40) being connected to a control circuit (78) for varying the thickness of the web (3) in conjunction with an adjusting mechanism (76), **characterised in that** the web (3) of plastics material is fed between the sensor system (5) and a guide roller (22) on which the web (3) is supported and the sensor system (5) has a capacitive and an inductive sensor (18, 19), the guide roller (22) forming a counter-electrode of the capacitive sensor (18).

2. Device as claimed in claim 1, **characterised in that** the guide roller (22) is made from aluminium.

3. Device as claimed in claim 1 or 2, **characterised in that** the guide roller (22) has a chromium-plated surface.

4. Device as claimed in one of the preceding claims, **characterised in that** the guide roller (22) is coupled with a rotary drive (53).

5. Device as claimed in one of the preceding claims, **characterised in that** the two sensors (18, 19) are disposed one immediately after the other in the feed direction - arrow (23) - of the web (3).

6. Device as claimed in one of claims 1 to 4, **characterised in that** the two sensors (18, 19) are disposed adjacent to one another substantially perpendicular to the feed direction of the web (3).

7. Device as claimed in one of the preceding claims, **characterised in that** the sensors (18, 19) are disposed with their defined plane (56) for taking the distance measurement disposed parallel with the top face (13) of the web (3).

8. Device as claimed in one of the preceding claims, **characterised in that** the sensors (18, 19) are disposed in the feed direction of the web (3) and in the plane (56) between the guide roller (22) and the web (3) extending parallel with the contact line (54) or contact surface (55) on the top face (13) of the web (3) remote from the guide roller (22).

9. Device as claimed in one of the preceding claims, **characterised in that** starting points (16, 17) of the sensors (18, 19) are disposed at a pre-settable distance from the contact surface (55) of the web (3) on the guide roller (22).

10. Device as claimed in claim 9, **characterised in that** the differential values between the output signals (60, 61) of the two sensors (18, 19) are determined in the evaluation unit (40) and the actual thicknesses of the web (3) are determined depending on previously determined reference values for specific thicknesses (2) of the web (3).

11. Device as claimed in one of the preceding claims, **characterised in that** a receiving carriage (42) of the traversing device (34) for the sensor system (5) is displaceable transversely to the feed direction of the web (3) via a drive mechanism (35).

12. Device as claimed in claim 11, **characterised in that** the receiving carriage (42) is slidingly displaceable relative to the web (3) in the longitudinal direction, on a guide track extending parallel with the top face (13) of the web (3).

13. Device as claimed in one of the preceding claims, **characterised in that** several sensor systems (5) are disposed transversely to the feed direction - arrow (23) - of the web (3) at a predetermined or pre-settable distance from one another.

14. Device as claimed in claim 13, **characterised in that** measuring areas (80 to 82) of the sensor systems (5) disposed immediately adjacent to one another for the web (3), transversely to the feed direction, overlap in this transverse direction.

15. Device as claimed in claim 11 or 12, **characterised in that** a displacement path of the sensor systems (5) is a fraction of the width of the web (3) corresponding to the number of sensor systems (5).

16. Device as claimed in one of the preceding claims, **characterised in that** the adjusting mechanism (76) is designed so as to vary an outlet gap of a least one of the nozzles (70 to 72).

17. Device as claimed in one of the preceding claims, **characterised in that** the evaluation unit (40) is a computer, in particular a personal computer (63), with an output device (51) for displaying thickness changes in the web (3) in and/or transversely to the feed direction of the web (3).

18. Device as claimed in claim 17, **characterised in that** the personal computer (63) is connected to the sensor system (5) via an interface card (64) and also to an input device (52), in particular a keyboard (66).

19. Method of regulating the thickness of a web (3) of plastics material leaving at least one nozzle (70 to 72) of an extruder, whereby the thickness of the web (3) is measured by a sensor system (5) and the measurement values forwarded to an evaluation unit (40), and whereby the evaluation unit (40) transmits signals to an adjusting mechanism (76) for varying the thickness of the web (3), **characterised in that** the web (3) is displaced between the sensor system (5) and a guide roller (22), the web (3) being supported on the guide roller (22), and the thickness of the web (3) is detected by a capacitive sensor (18), by measuring the distance to the guide surface of the guide roller (22), and is represented in a first output signal, and differential values are determined in the evaluation unit (40) on the basis of the first output signal from the capacitive sensor (18) correlated with a distance to the guide surface of the guide roller (22) detected by an inductive sensor (19), this distance being represented by a second output signal, and the derived differential values are compared with reference values for different thicknesses determined for the web (3) beforehand and the actual thickness of the web (3) is determined accordingly, and, before being forwarded to the adjusting mechanism (76), the differential signal or at least the characteristic value thereof is multiplied in the evaluation unit (40) by a correction factor obtained by a reference measurement on a reference section of the web (3) to be measured.

20. Method as claimed in claim 19, **characterised in that** the first and second output signal are mathematically linked in such a way that the differential signal is strictly proportional to the thickness of the web (3).

## Revendications

1. Dispositif de réglage de l'épaisseur d'une bande (3) en matériau synthétique sortant d'au moins une base (70 à 72) d'une extrudeuse avec un agencement de capteurs (5) qui est disposé d'une manière déplaçable à une installation de traversée (34) transversalement à la direction de convoyage et parallèlement à un côté supérieur (13) de la bande (3) et qui est relié, pour la transmission de signaux de sortie (60, 61), notamment d'une tension de sortie, par des lignes à une unité d'évaluation (40), où l'unité d'évaluation (40) est commutée ensemble avec un dispositif d'ajustement (76) pour modifier l'épaisseur de la bande (3) en un circuit de réglage (78), **caractérisé en ce que** la bande (3) en matériau synthétique est amenée à passer entre l'agencement de capteurs (5) et un rouleau de guidage (22) sur lequel prend appui la bande (3), et que l'agencement de capteurs (5) comprend un capteur capacitif et un capteur inductif (18, 19) où le rouleau de guidage (22) forme une contre-électrode du capteur capacitif (18).

2. Dispositif selon la revendication 1, **caractérisé en ce que** le rouleau de guidage (22) est réalisé en aluminium.

3. Dispositif selon la revendication 1 ou 2, **caractérisé en ce que** le rouleau de guidage (22) présente une surface chromée.

4. Dispositif selon l'une des revendications précédentes, **caractérisé en ce que** le rouleau de guidage (22) est couplé avec un organe d'entraînement en rotation (53).

5. Dispositif selon l'une des revendications précédentes, **caractérisé en ce que** les deux capteurs (18, 19) sont disposés dans la direction de convoyage - flèche (23) - de la bande (3) directement l'un derrière l'autre.

6. Dispositif selon l'une des revendications 1 à 4, **caractérisé en ce que** les deux capteurs (18, 19) sont disposés à peu près perpendiculairement à la direction de convoyage de la bande (3) l'un à côté de l'autre.

7. Dispositif selon l'une des revendications précédentes, **caractérisé en ce que** les capteurs (18, 19) avec leur plan (56) défini pour la mesure de la distance sont disposés parallèlement au côté supérieur (13) de la bande (3).

8. Dispositif selon l'une des revendications précédentes, **caractérisé en ce que** les capteurs (18, 19) sont disposés dans le plan (56) s'étendant parallèlement à la direction de convoyage de la bande (3) et à la ligne (54) respectivement face (55) de contact entre le rouleau de guidage (22) et la bande (3) sur le côté supérieur (13) de la bande (3) éloigné du rouleau de guidage (22).

9. Dispositif selon l'une des revendications précédentes, **caractérisé en ce que** des points de départ (16, 17) des capteurs (18, 19) sont disposés à un écart préréglable de la face de contact (55) de la bande (3) au rouleau de guidage (22).

10. Dispositif selon la revendication 9, **caractérisé en ce que** sont déterminés dans l'installation d'évaluation (40) les valeurs différentielles entre les signaux de sortie (60, 61) des deux capteurs (18, 19) et que sont établis en fonction de valeurs de référence déterminées avant pour des épaisseurs déterminées (2) de la bande (3) les épaisseurs réelles de la bande (3).

11. Dispositif selon l'une des revendications précédentes, **caractérisé en ce qu'**un chariot de réception (42) de l'installation de traversée (34) pour l'agencement de capteurs (5) est réalisé d'une manière déplaçable par un dispositif d'entraînement (35) transversalement à la direction de convoyage de la bande (3).

12. Dispositif selon la revendication 11, **caractérisé en ce que** le chariot de réception (42) est disposé d'une manière déplaçable sur une bande de guidage s'étendant parallèlement au côté supérieur (13) de la bande (3) dans la direction longitudinale relativement à la bande (3).

13. Dispositif selon l'une des revendications précédentes, **caractérisé en ce que** transversalement à la direction de convoyage - flèche (23) - de la bande (3) plusieurs agencements de capteurs (5) sont disposés à un écart pouvant être prédéfini ou préréglé.

14. Dispositif selon la revendication 13, **caractérisé en ce que** des taches de mesure (80 à 82) des agencements de capteurs (5) disposés directement l'un à côté de l'autre transversalement à la direction de convoyage de la bande (3), en rapport à cette direction transversale, sont disposées de manière à se chevaucher.

15. Dispositif selon la revendication 11 ou 12, **caractérisé en ce qu'**un trajet de déplacement des agencements de capteurs (5) correspond à une fraction de la largeur de la bande (3) correspondant au nombre des agencements de capteurs (5).

16. Dispositif selon l'une des revendications précédentes, **caractérisé en ce que** le dispositif d'ajustement (76) est réalisé pour modifier une fente de sortie d'au moins l'une des buses (70 à 72).

17. Dispositif selon l'une des revendications précédentes, **caractérisé en ce que** l'unité d'évaluation (40) est formée par un calculateur, notamment un ordinateur personnel (63), avec un dispositif d'émission (51) pour indiquer la courbe d'épaisseur de la bande (3) dans et/ou transversalement à la direction de convoyage de la bande (3).

18. Dispositif selon la revendication 17, **caractérisé en ce que** l'ordinateur personnel (63) est relié par une carte d'interface (64) à l'agencement de capteurs (5) et en outre à un dispositif d'entrée (52), notamment un clavier (66).

19. Procédé de réglage de l'épaisseur d'une bande (3) en matériau synthétique sortant d'au moins une buse (70 à 72) d'une extrudeuse, où l'épaisseur de la bande (3) est mesurée avec un agencement de capteurs (5) et les valeurs de mesure sont transmises à une unité d'évaluation (40), et où l'unité d'évaluation (40) transmet des signaux à un dispositif d'ajustement (76) pour modifier l'épaisseur de la bande (3), **caractérisé en ce que** la bande (3) est amenée à passer entre l'agencement de capteurs (5) et un rouleau de guidage (22), où la bande (3) prend appui sur le rouleau de guidage (22), et **en ce que** l'épaisseur de la bande (3) est détectée avec un capteur capacitif (18) par une mesure de la distance à la face de guidage du rouleau de guidage (22) et est représentée par un premier signal de sortie et **en ce que** sont déterminées à l'aide du premier signal de sortie du capteur capacitif (18) en corrélation avec une distance constatée par un capteur inductif (19) à la face de guidage du rouleau de guidage (22), où cette distance est représentée par un deuxième signal de sortie, des valeurs différentielles dans l'unité d'évaluation (40), et les valeurs différentielles obtenues sont comparées avec des valeurs de référence déterminées préalablement pour la bande (3) pour des épaisseurs différentes et ainsi, l'épaisseur réelle de la bande (3) est constatée, et **en ce que** le signal différentiel respectif la valeur caractéristique de celui-ci, avant la transmission à l'installation de réglage (76), est multipliée par l'unité d'évaluation (40) avec un facteur d'adaptation qui est obtenu par une mesure de référence à un tronçon de référence de la bande (3) à mesurer.

20. Procédé selon la revendication 19, **caractérisé en ce que** le premier et le second signal de sortie sont noués d'une manière arithmétique de telle sorte que le signal de différence est strictement proportionnel à l'épaisseur de la bande (3).
